(19) Europäisches Patentamt
European Patent Office
Office européen des brevets

(11) Publication number: **0 374 264 B1**

## EUROPEAN PATENT SPECIFICATION

(45) Date of publication of patent specification: **20.04.94**

(51) Int. Cl.5: **C08L 15/00**, C08L 9/02, C08K 5/09, B29D 31/00

(21) Application number: **89907258.1**

(22) Date of filing: **07.06.89**

(86) International application number:
**PCT/JP89/00578**

(87) International publication number:
**WO 89/12077 (14.12.89 89/29)**

The file contains technical information submitted after the application was filed and not included in this specification

(54) **RUBBER ROLL.**

(30) Priority: **08.06.88 JP 140834/88**

(43) Date of publication of application:
**27.06.90 Bulletin 90/26**

(45) Publication of the grant of the patent:
**20.04.94 Bulletin 94/16**

(84) Designated Contracting States:
**DE FR GB IT**

(56) References cited:
**JP-A-58 118 371**
**JP-A-58 201 830**
**JP-B- 5 545 086**

**DATABASE WPI, Derwent Publications Ltd., London (GB); no. 78-62696a&NUM;**

(73) Proprietor: **NIPPON ZEON CO., LTD.**
**6-1, Marunouchi 2-chome**
**Chiyoda-ku Tokyo 100(JP)**

(72) Inventor: **OYAMA, Motofumi**
**5-27-6, Hailando**
**Yokosuka-shi Kanagawa 239(JP)**
Inventor: **SHIMODA, Hideyoshi**
**2-26, Kajiwara**
**Kamakura-shi Kanagawa 247(JP)**
Inventor: **SAITO, Yoshiomi**
**1-13-1, Misora**
**Yotsukaido-shi Chiba 284(JP)**

(74) Representative: **Myerscough, Philip Boyd et al**
**J.A.KEMP & CO.**
**14, South Square**
**Gray's Inn**
**London WC1R 5LX (GB)**

EP 0 374 264 B1

**Description**

This invention relates to a rubber roll, and more specifically, to a rubber roll having excellent strength properties, abrasion resistance and heat resistance.

The rubber roll is made by coating a core with a rubber compound and then vulcanizing the rubber compound. It is used in machines and devices in steel-making, papermaking, pulp, spinning, printing and plywood manufacuring factories, and also in office machines and instruments such as printers, copying machines and typewriters and in aoustical devices. The function of the rubber roll differs depending upon the place where it is used, and the rubber material is selected depending upon the use conditions. Heretofore, chloroprene rubber, acrylonitrile/butadiene copolymer rubbers (NBR) and acrylic rubbers have been used as oil-resistant rubber materials for such rolls. However in recent years, the rubber roll processing line in the steelmaking industry, the papermaking industry and the printing industry has been operated at a high speed in order to increase productivity, and the rubber rolls have been subjected to high temperatures, high loads and high rotations during use. It has therefore been necessary for the rubber material for these rolls to have heat aging resistance and mechanical strength properties and low heat-buildup upon repeated compression.

When the surface rubber is worn out or its edge is broken in the rubber roll, the production line must be stopped in order to replace the rubber roll or re-polish the roll surface. For this reason, the rubber roll has been strongly required to have a prolonged life cycle, and the rubber material has been required to have abrasion resistance and high tear strength properties.

It is difficult, however, to make a roll having a long service life, heat resistance and low heat buildup from conventional rubber materials. A nitrile group-containing highly saturated rubber (so-called hydrogenated NBR) is available as a rubber material having heat resistance and oil resistance. This rubber has higher beat buildup than NBR and has improved abrasion resistance and tear strength over NBR. These properties, however, are still insufficient, and are further desired to be improved.

JP-A-53085842 discloses a process comprising heat curing a mixture of (a) diene-type rubber, (b) alpha, beta-ethylenically unsaturated carboxylic acid (wt. ratio of (a)/(b) is 87/13-55/45), (c) 50-150 pts. wt. (per 100 pts. wt. of (b)) of a divalent metal compound, (d) 0.3-3 pts. wt. (per 100 pts. wt. (a) and (b)) of an organic peroxide, and (e) 1.5-17 pts. wt. (per 100 pts. wt. (a)) of a carboxylic acid, which does not polymerise with (d), or its metal salt. The composition is used for producing rollers.

According to this invention, there are provided (1) a rubber roll composed of a vulcanizate of a rubber composition comprising a nitrile group-containing highly saturated rubber having an iodine number of not more than 60, zinc methacrylate and an organic peroxide, the content of the nitrile monomer units in said rubber being 10 to 60 % by weight, and (2) a rubber roll composed of a vulcanizate of a rubber composition prepared by adding a zinc compound and methacrylic acid to a nitrile group-containing highly saturated rubber, forming zinc methacrylate in the rubber, and then incorporating an organic peroxide.

One example of the nitrile group-containing highly saturated rubber used in this invention is rubber obtained by hydrogenating the conjugated diene units of a copolymer rubber composed of an ethylenically unsaturated nitrile such as acrylonitrile, methacrylonitrile or alpha-chloroacrylonitrile and a conjugated diene such as 1,3-butadiene, isoprene, 1,3-pentadiene or 2,3-dimethyl-1,3-butadiene. Another example is a copolymer rubber composed of the above ethylenically unsaturated nitrile, the conjugated diene, and at least one monomer copolymerizable with these, or rubber obtained by hydrogenating the conjugated diene units of the copolymer rubber. Examples of the copolymerizable monomer include ethylenically unsaturated carboxylic acid esters such as methyl (meth)acrylate, ethyl (meth)acrylate, propyl (meth)acrylate, butyl (meth)acrylate, methoxyethyl (meth)acrylate and ethoxyethyl (meth)acrylate; and cyano-substituted alkyl esters of (meth)acrylic acid such as cyanomethyl (meth)acrylate, 1- or 2-cyanoethyl (meth)acrylate, 1-cyanopropyl (meth)acrylate, 4-cyanobutyl (meth)acrylate, 6-cyanohexyl (meth)acrylate, 2-ethyl-6-cyanohexyl (meth)acrylate and 8-cyanooctyl (meth)acrylate.

The amount of the ethylenically unsaturated nitrile monomer units in the nitrile group-containing highly saturated rubber is 10 to 60 % by weight. If it is less than 10 % by weight, the oil resistance of the rubber is not sufficient. If it exceeds 60 % by weight, the elasticity of the rubber undesirably decreases.

The nitrile group-containing highly saturated rubber has an iodine number of not more than 60. If its iodine number exceeds 60, the resulting rubber roll has inferior heat resistance and abrasion resistance. The preferred iodine number is not more than 40.

In the present invention, a phenolic resin may be used in combination with the nitrile group-containing highly saturated rubber. This embodiment of the invention is desirable because it leads to the improvement of the abrasion resistance of the rubber roll. The phenolic resin may be any phenolic resin which is obtained by reacting a phenol such as phenol, cresol or chlorophenol with formaldehyde in the presence of

EP 0 374 264 B1

an acid or alkaline catalyst. Not only the straight resins but also modified phenolic resins such as phenolic resins modified with cashew, epoxies or elastomers may be used in this invention.

The amount of the phenolic resin to be used may be properly selected depending upon the property of the rubber required. Usually, its suitable amount is 5 to 40 parts by weight per 100 parts by weight of the nitrile group-containing highly saturated rubber. If its amount is less than 5 parts by weight, the effect of improving abrasion resistance is small. On the other hand, if it exceeds 40 parts by weight, the heat resistance of the rubber is deteriorated. The preferred amount is 5 to 20 parts by weight.

The organic peroxide used in this invention may be any of those which are usually employed in peroxide vulcanization of rubber. Examples include dicumyl peroxide, di-t-butyl peroxide, t-butylcumyl peroxide, benzoyl peroxide, 2,5-dimethyl-2,5-di(t-butylperoxy)-hexyne-3, 2,5-dimethyl-2,5-di(benzoylperoxy)-hexane and 2,5-dimethyl-2,5-mono(t-butylperoxy)-hexane. At least one of these organic peroxides may be used in a total amount of usually 0.2 to 10 parts by weight per 100 parts by weight of the rubber. Its optimal amount may be determined according to the physical property required.

Usually, zinc methacrylate prepared in advance may be added to the rubber. At times, it may be prepared in situ by separately adding methacrylic acid and a zinc compound to the rubber during the production of the rubber composition and reacting them to produce zinc methacrylate in situ. Any zinc compound which can form a salt with methacrylic acid may be used, but zinc oxide, zinc hydroxide and zinc carbonate are preferred.

The amount of zinc methacrylate used is not particularly limited, but is preferably 3 to 80 parts by weight per 100 parts by weight of rubber. If it is less than 3 parts by weight, the vulcanized rubber has inferior abrasion resistance and tear strength. If it exceeds 80 parts by weight, the permanent compression set of the vulcanized rubber becomes large.

According to the use of the rubber roll, various chemicals used in the rubber industry may be incorporated together with the above components. Examples of the chemicals are reinforcing agents such as carbon black and silica, fillers such as calcium carbonate and talc, curing coagents such as triallyl isocyanurate and trimethylolpropane, sulfur, various vulcanization accelerators, plasticizers, stabilizers, processing aids and coloring agents. The rubber composition may be prepared by using an ordinary mixer such as a roll or a Banbury mixer.

Effects of the Invention

The present invention can give a rubber roll having better strength properties, abrasion resistance and heat resistance than the prior art. This rubber roll is useful in printing, papermaking, steelmaking, office machines, the plastic industry and the plywood manufacturing industry.

Examples

The following examples illustrate the invention more specifically. All parts and percentages in the Examples and Comparative Examples are by weight unless otherise specified.

Example 1

Emulsion-polymerized acrylonitrile/butadiene copolymer rubber (NBR) (E) and butadiene/butyl acrylate/acrylonitrile terpolymer (H) were dissolved in methyl isobutyl ketone, and hydrogenated by using a Pd-carbon catalyst to prepare hydrogenated NBR (A) to (D) and hydrogenated acrylonitrile/butadiene/butyl acrylate terpolymer rubbers (F) and (G) having the iodine numbers indicated in Table 1.

3

## Table 1

| Rubber No.<br><br>Composition | Hydrogenated NBR | | | | | Hydrogenated acrylonitrile butadiene/ butyl acrylate copolymer rubber | | |
|---|---|---|---|---|---|---|---|---|
| | A | B | C | D | E | F | G | H |
| Bound acrylonitrile content (% by weight) | 45 | 37 | 33 | 37 | 37 | 35 | 35 | 35 |
| Proportion of the butyl acrylate portion (% by weight) | – | – | – | – | – | 60 | 35 | 35 |
| Iodine number | 15 | 2 | 45 | 70 | 280 | 23 | 11 | 138 |

By using these rubbers, rubber compositions were prepared in accordance with the compounding recipes shown in Table 2. The properties of the compositions were measured by the following methods, and the results are shown in Table 2.

Strength properties

Vulcanized sheets having a thickness of 2 mm were obtained by press-curing the compositions under the vulcanization conditions shown in Table 2. Their strength properties were measured in accordance with JIS K-6301.

Abrasion resistance

Test samples were prepared by press-curing the compositions under the vulcanization conditions indicated in Table 2. The samples were subjected to a Pico abrasion test in accordance with ASTM D-2228, and the results were expressed as abrasion volumes (cc).

Heat buildup

In accordance with ASTM D-623, samples having a diameter of 19.05 mm (0.75 inch) and a height 25.4 mm (1 inch) were prepared under the vulcanization conditions indicated in Table 2, and subjected to a Goodrich flexometer. The measuring conditions were as follows:-
Temperature: 100 °C
Load: 11.3 kg (25 pounds)
Stroke: 0.175 (%)
Rotating speed: 1800 rpm
Repetitive compression time: 25 minutes
The difference between the maximum temperature of the sample and its starting temperature was shown in Table 2 as heat generation (°C). The above measurement was possible only with rubber vulcanizates having a hardness of not more than 75, and materials having a larger hardness were not measured in this example.

4

## Table 2

| Run No. | Comparison | | | | | Invention | | | | | | |
|---|---|---|---|---|---|---|---|---|---|---|---|---|
| Compounding receipe /Properties of the vulcanizate | 1 | 2 | 3 | 4 | 5 | 6 | 7 | 8 | 9 | 10 | 11 | 12 |
| Rubber No. | D | E | H | H | C | A | B | C | F | G | G | C |
| Compounding rubber | 100 | 100 | 100 | 100 | 100 | 100 | 100 | 100 | 100 | 100 | 100 | 100 |
| Zinc oxide | 5 | 5 | 5 | 20 | 5 | 5 | 5 | 5 | 5 | 5 | 20 | 20 |
| SRF carbon black | 30 | 30 | 30 | 30 | 60 | 30 | 30 | 30 | 30 | 30 | 30 | 30 |
| Zinc dimethacrylate | 15 | 15 | 15 | – | – | 15 | 15 | 15 | 15 | 15 | – | – |
| Peroximon F–40 (*) | 2 | 2 | 6 | 2 | 6 | 6 | 6 | 6 | 6 | 6 | 6 | 6 |
| Methacrylic acid | – | – | – | 10 | – | – | – | – | – | – | 10 | 10 |
| Vulcanization conditions Temperature (°C) Time (minutes) | 170 60 | | | | | 170 60 | | | | | | |

(continued)

\* Trade mark of 1,3 - bis (tert-butyl-peroxyisopropyl) benzene.

EP 0 374 264 B1

Table 2 (continued)

| Compounding recipe /Properties of the vulcanizate \ Run No. | Comparison | | | | | Invention | | | | | | |
|---|---|---|---|---|---|---|---|---|---|---|---|---|
| | 1 | 2 | 3 | 4 | 5 | 6 | 7 | 8 | 9 | 10 | 11 | 12 |
| Rubber No. | D | E | H | H | C | A | B | C | F | G | G | C |
| **Tensile test** | | | | | | | | | | | | |
| Tensile strength (kg/cm$^2$) | 212 | 168 | 159 | 146 | 231 | 395 | 359 | 324 | 319 | 332 | 386 | 358 |
| Elongation (%) | 280 | 290 | 220 | 210 | 240 | 490 | 450 | 410 | 400 | 390 | 420 | 430 |
| Hardness (JIS) | 70 | 69 | 70 | 69 | 73 | 73 | 73 | 73 | 71 | 72 | 72 | 71 |
| Tear test (kg/cm) | 26 | 23 | 21 | 18 | 31 | 62 | 55 | 46 | 42 | 47 | 49 | 51 |
| **Air heat aging test (150 °C, 10 days)** | | | | | | | | | | | | |
| Tensile strength (kg/cm$^2$) | 850 | ** | ** | ** | 187 | 311 | 263 | 248 | 247 | 255 | 263 | 249 |
| Elongation (%) | 60 | ** | ** | ** | 100 | 290 | 240 | 170 | 190 | 200 | 210 | 200 |
| Hardness (JIS) | 90 | 96 | 98 | 97 | 84 | 79 | 80 | 80 | 79 | 79 | 79 | 79 |
| **Pico abrasion test** | | | | | | | | | | | | |
| Amount of abrasion ($\times 10^{-3}$ cm$^3$) | 13.4 | 14.1 | 13.9 | 14.4 | 10.5 | 5.9 | 6.0 | 6.1 | 6.9 | 6.3 | 6.2 | 5.9 |
| flexometer heat generation (°C) | 19 | 18 | 20 | 20 | 27 | 23 | 22 | 21 | 22 | 22 | 21 | 21 |

** Measurement was impossible because the sample was broken when bent during measurement

## Example 2

Using the rubbers of Example 1, compounding rubber compositons were prepared in accordance with the compounding recipes shown in Table 3, and press-cured under the vulcanization conditions shown in Table 3. The properties of the vulcanizates were measured as in Example 1, and the results are shown in Table 3.

## Table 3

| Compounding receipe / properties of the vulcanizate | Comparison | | | | Invention | | | | |
|---|---|---|---|---|---|---|---|---|---|
| Run No. | 13 | 14 | 15 | 16 | 17 | 18 | 19 | 20 | 21 |
| Rubber E / Rubber C | 100 | 100 | 100 | 100 | 100 | 100 | 100 | 100 | 100 |
| Zinc oxide | 5 | 5 | 5 | 5 | 5 | 5 | 5 | 5 | 5 |
| SRF carbon black | 60 | 30 | – | 60 | 45 | 30 | 15 | – | – |
| Zinc dimethacrylate | – | 40 | 80 | – | 20 | 40 | 60 | 80 | 40 |
| Sanilite Resin PR-12687 (*) | 20 | 10 | – | 20 | 15 | 10 | 5 | – | 20 |
| Peroximon F-40 (1) | 6 | 2 | 2 | 6 | 6 | 6 | 6 | 6 | 6 |
| Vulcanization conditions Temperature (°C) | 170 | | | | | | 170 | | |
| Time (minutes) | 20 | | | | | | 20 | | |
| Tensile test Tensile strength (kg/cm$^2$) | 218 | 234 | 170 | 197 | 283 | 344 | 395 | 289 | 412 |
| Elongation | 170 | 180 | 80 | 390 | 500 | 460 | 330 | 160 | 720 |
| Hardness (JIS) | 84 | 94 | 96 | 81 | 84 | 88 | 93 | 98 | 86 |

(continued)

7

Table 3 (continued)

| Compounding recipe /properties of the vulcanizate \ Run No. | Comparison | | | | Invention | | | | |
|---|---|---|---|---|---|---|---|---|---|
| | 13 | 14 | 15 | 16 | 17 | 18 | 19 | 20 | 21 |
| Tear test (kg/cm) | 26 | 35 | 31 | 37 | 59 | 72 | 64 | 52 | 89 |
| Air heat-aging test 175 °C x 5 days | | | | | | | | | |
| Tensile strength (kg/cm$^2$) | ** | ** | ** | 115 | 147 | 131 | 115 | 103 | 185 |
| Elongation (%) | ** | ** | ** | 70 | 80 | 60 | 60 | 60 | 160 |
| Hardness (JIS) | 96 | 98 | 100 | 92 | 93 | 95 | 96 | 98 | 93 |
| Pico abrasion test Amount of abrasion ($\times 10^{-3}$ cm$^3$) | 8.5 | 8.1 | 8.9 | 6.9 | 4.2 | 3.6 | 5.4 | 4.0 | 5.2 |

*: a phenolic resin produced by Sumitomo - Durez Company

**: Measurement was impossible because the sample was broken when bent during the measurement.

## Claims

1. A rubber roll composed of a vulcanizate of a rubber composition comprising a nitrile group-containing highly saturated rubber having an iodine number of not more than 60, zinc methacrylate and an organic peroxide, the content of nitrile monomer units in said rubber being 10 to 60 % by weight.

2. The rubber roll of claim 1 in which the rubber composition is prepared by adding a zinc compound and methacrylic acid to a nitrile group-containing highly saturated rubber, forming zinc methacrylate in the

8

rubber, and then incorporating an organic peroxide.

3. The rubber roll of claim 1 or 2 in which the rubber composition further comprises a phenolic resin.

**Patentansprüche**

1. Kautschukrolle, bestehend aus einem Vulkanisat einer Kautschukmasse, umfassend einen Ntrilgruppen-haltigen hochgesättigten Kautschuk mit einer Iodzahl von nicht mehr als 60, Zinkmethacrylat und ein organisches Peroxid, wobei der Gehalt an Nitrilmonomer-Einheiten in dem Kautschuk 0 bis 60 Gew.-% beträgt.

2. Kautschukrolle nach Anspruch 1, wobei die Kautschukmasse hergestellt wird durch Zugabe einer Zinkverbindung und von Methacrylsäure zu einem Nitrilgruppen-haltigen hochgesättigten Kautschuk, Bildung von Zinkmethacrylat in dem Kautschuk und anschließenden Einbau eines organischen Peroxids.

3. Kautschukrolle nach Anspruch 1 oder 2, wobei die Kautschukmasse zusätzlich ein Phenolharz umfaßt.

**Revendications**

1. Rouleau en caoutchouc consistant en un produit de vulcanisation d'une composition de caoutchouc comportant un caoutchouc hautement saturé contenant un groupe nitrile et ayant un indice d'iode inférieur à 60, du méthacrylate de zinc et un peroxyde organique, la proportion de motifs monomères nitrile dans le caoutchouc valant 10 à 60% en poids.

2. Rouleau en caoutchouc selon la revendication 1, dans lequel la composition de caoutchouc est préparée par addition d'un composé du zinc et d'acide méthacrylique à un caoutchouc hautement saturé pour former un méthacrylate de zinc dans le caoutchouc, et ensuite incorporation du peroxyde organique.

3. Rouleau en caoutchouc selon la revendication 1 ou 2 dans laquelle la composition de caoutchouc comporte de plus une résine phénolique.